# EUROPÄISCHE PATENTSCHRIFT

(11) **EP 1 534 579 B1**
(45) Veröffentlichungstag und Bekanntmachung des Hinweises auf die Patenterteilung: **22.03.2006**
(21) Anmeldenummer: 03794892.4
(22) Anmeldetag: 19.08.2003
(51) Int. Cl.: B62D 29/00

(54) **VERFAHREN ZUM FIXIEREN VON SCHOTTTEILEN UND BAUTEILE HIERFÜR**
METHOD FOR FIXING BULKHEAD PIECES AND COMPONENTS FOR THE SAME
PROCEDE DE FIXATION DE PIECES DE CLOISONNEMENT ET ELEMENTS STRUCTURELS A CET EFFET

(30) Priorität: 28.08.2002 DE 10240196
(43) Veröffentlichungstag der Anmeldung: 01.06.2005
(73) Patentinhaber: Henkel Kommanditgesellschaft auf Aktien, 40589 Düsseldorf (DE)
(72) Erfinder: WESCH, Karl, 69429 Waldbrunn (DE); DALHÄUSER, Ralph, 68519 Viernheim (DE)
(86) Internationale Anmeldenummer: PCT/EP2003/009154
(87) Internationale Veröffentlichungsnummer: WO 2004/024540

(56) Entgegenhaltungen:
- US-A- 1 993 307
- US-A- 4 810 548
- US-A- 5 979 902
- US-B1- 6 186 581
- US-B1- 6 305 430
- US-B1- 6 358 584
- PATENT ABSTRACTS OF JAPAN vol. 2002, no. 08, 5. August 2002 (2002-08-05) -& JP 2002 099281 A (NEOEX LAB INC), 5. April 2002 (2002-04-05)
- PATENT ABSTRACTS OF JAPAN vol. 1995, no. 11, 26. Dezember 1995 (1995-12-26) -& JP 07 205835 A (NEOX LAB:KK), 8. August 1995 (1995-08-08)

## Beschreibung

Die vorliegende Erfindung betrifft akustisch wirkende und abdichtende Schottteile, die geeignet sind zur mechanischen Fixierung im Hohlraum von strukturellen Bauteilen sowie ein Verfahren zu ihrem Fixieren in den Hohlräumen dieser strukturellen Bauteile.

Moderne Fahrzeugkonzepte und Fahrzeugkonstruktionen weisen eine Vielzahl von Hohlräumen auf, die abgedichtet werden müssen um den Eintritt von Feuchtigkeit und Verschmutzungen zu verhindern, da diese zur Korrosion an den entsprechenden Karosserieteilen von innen herausführen kann. Dies betrifft insbesondere auf moderne selbsttragende Karosseriekonstruktionen zu, bei denen eine schwere Rahmenkonstruktion durch sogenannte "space frames" ersetzt werden. Bei letzterer wird ein leichtgewichtiges, strukturfestes Rahmengerüst aus vorgefertigten Hohlprofilen verwendet. Derartige Konstruktionen weisen systembedingt eine Reihe von Hohlräumen auf, die gegen das Eindringen von Feuchtigkeit und Verschmutzungen abgedichtet werden müssen. Da diese Hohlräume außerdem Luftschall in Form von unangenehmen Fahrzeuglauf- und Windgeräuschen weiterleiten, dienen derartige Abdichtmaßnahmen auch zur Minderung der Geräusche und damit zur Erhöhung des Fahrkomforts im Fahrzeug. Bei herkömmlicher Bauweise wurden diese Hohlräume enthaltenden Rahmen- und Karosserieteile aus halbschaligen Bauteilen vorgefertigt, die zu einem späteren Zeitpunkt durch Schweißen und/oder Kleben zu dem geschlossenen Hohlprofil gefügt wurden. Bei derartiger Bauweise war der Hohlraum im frühen Aufbauzustand einer Fahrzeugkarosserie also leicht zugänglich, so dass abdichtende und akustisch dämpfende Schottteile in diesen frühen Phase des Rohbaus durch mechanisches Einhängen, durch Einstecken in entsprechende Haltevorrichtungen, Bohrungen oder durch Anschweißen fixiert werden konnten.

Im modernen Fahrzeugbau der "Spaceframe" Technik werden jedoch vorgefertigte Hohlprofile eingesetzt, deren Hohlräume nur noch durch die Querschnittsöffnungen am Ende dieser Profile zugänglich sind. Üblicherweise werden derartige Hohlprofile heute aus Stahl-, Aluminium- oder Kunststoffwerkstoffen im Strangpressverfahren, durch Hydroforming, durch Druckguss oder durch Zieh-Verfahren hergestellt.

Schottteile, die eine abdichtende und/oder akustische Wirkung in derartigen Hohlräumen bewirken, werden im angelsächsischen Sprachgebrauch auch "pillar filler" oder "baffles" oder "acoustic baffles" genannt. Sie bestehen in der Regel entweder vollständig aus thermisch expandierbaren Formkörpern oder aus Formkörpern, die einen Träger und in ihrem Peripheriebereich expandierbare polymere Bindemittel enthalten. Diese Schottteile werden dann im Rohbau durch Einhängen, Einclipsen, Verschrauben oder Anschweißen an den offenen Baustrukturen befestigt. Nachdem Schließen der Baustrukturen im Rohbau und den weiteren Vorbehandlungen der Karosserie wird dann die Prozesswärme der Öfen zur Aushärtung der kathodischen Tauchlackierung (KTL bzw. E-coat) ausgenutzt, um die Expansion des expandierbaren Teils des Schottteils auszulösen um somit den Querschnitt des Hohlraums abzudichten.

Die EP 0453777 A2 schlägt zum Abdichten derartiger Hohlräume vor, einen vorgeformten Stopfen aus einem expandierbaren Dichtstoffmaterial bereitzustellen. Dieser soll dann in eine hierfür geschaffene Öffnung des Hohlprofils gesteckt werden, wobei der expandierbare Teil in den Innenraum des Hohlprofils hineinragt und dort im KTL-Ofen expandiert, so dass die Abdichtwirkung erfolgt. Diese Methode ist für vorgeformte Hohlprofile, die keine Hilfsöffnung aufweisen, nicht geeignet.

US 4,810,548 offenbart ein sandwichartiges Bauteil aus einem expandierbaren Schaummaterial als Kemmaterial das zwischen zwei begrenzenden Platten aus einem relativ steifen Material angeordnet ist. Eine oder mehrere dieser Platten weisen dabei zusätzlich stabilisierende und dirigierende "Füße" oder Clips auf, die auch zum mechanischen Fixieren des Bauteils in vorgesehenen Öffnungen des später zu bildenden Hohlkörpers dienen.

WO 95/25005 beschreibt einen Verbundwerkstoff umfassend einen aus zwei miteinander verbundenen Platten bestehenden Träger, der zwischen diesen Platten einen Raum begrenzt. In diesem Raum ist ein unter Wärmeeinwirkung schäumbares Material angeordnet, dass bei Zufuhr von Wärme im geschäumten Zustand durch wenigstens eine Öffnung des Trägers aus dem Begrenzungsraum heraustritt und somit die Abdichtung bewirkt. Der Träger ist dabei mit Mitteln zum Positionieren und / oder Fixieren des Verbundwerkstoffes in dem Hohlraum versehen. Durch die geschlossenen Strukturen eines Hohlprofils der vorgenannten Art ist dieses Bauteil nicht in den Hohlraum des Hohlprofils einzubringen.

WO 01/71225 beschreibt ein expandierbares Schottteil zum Abdichten von Hohlräumen in Automobilen. Dieses Schottteil umfasst ein thermisch expandierbares Abdichtungsmaterial, das bei den Temperaturen der Lacköfen expandieren kann. Weiterhin umfasst das Schottteil einen Träger, der das expandierbare Material an der vorbestimmten Stelle in dem Hohlraum positioniert und fixiert, bis die thermische Expansion einsetzt. Der Träger weist fernerhin mindestens ein Clips oder eine Schnapp- oder Steckvorrichtung auf, die in eine entsprechende Bohrung oder Öffnung in der Hohlraumstruktur unter Druck eingesteckt wird, um das Bauteil zu fixieren.

US 5,642,914 schlägt ein Schottteil aus einem expandierbaren Material und einem metallischen Träger vor, wobei der Träger Fixierungsflansche aufweist, mit deren Hilfe dieses Bauteil an der inneren Oberfläche der Hohlstruktur durch Punktschweißen befestigt werden soll.

WO 01/83206 beschreibt ein Schottteil zur Verwendung in dem Hohlraum eines strukturellen Bauteils einer Fahrzeugkarosse zur Dämpfung von akustischen Schallwellen und zur Versteifung des Bauteils quer zur Längsachse des strukturellen Bauteils. Das Schottteil besteht dabei aus einem Kunststoffträger mit einem Randbereich. In dem Randbereich ist ein kontinuierliches Band eines expandierbaren Materials angeordnet. Weiterhin soll der Träger ein Fixierungsmittel in Form eines Clips aufweisen, der in die dafür vorgesehenen Löcher in der Wandung des strukturellen Bauteils gesteckt werden soll. Auch derartige Schottteile sind nicht geeignet, in vorgefertigte Hohlprofile eingebracht zu werden.
Ähnliche Bauteile mit clipsartigen Fixierungsmitteln, die entsprechende Bohrungen in den strukturellen Bauteilen erfordern und nur in offene Profilteile einsetzbar sind werden durch die EP 1031491 B1 sowie die EP 1037767 B1 beschrieben.

Außerdem beschreibt JP 2002 099281 A ein abdittendes und akustisch wirkendes Schottteil geeignet zur mechanischen Fixierung im Hohlraum von strukturellen Bauteilen.

Angesichts dieses Standes der Technik haben sich die Erfinder die Aufgabe gestellt, Schottteile mit abdichtender und akustisch wirksamer Funktion bereitzustellen, die geeignet sind eine mechanische Fixierung in vorgefertigten Hohlprofilen ohne Montageöffnungen oder Bohrungen zu ermöglichen, wobei derartige Hohlprofile bevorzugt als strukturelle Bauteile in modernen Fahrzeugbau eingesetzt werden.

Die erfindungsgemäße Lösung der Aufgabe ist den Patentansprüchen zu entnehmen. Sie besteht im wesentlichen in der Bereitstellung von Formkörpern, die in ihrem Außenrandbereich einen hohen Reibungskoeffizienten gegen Metalle und/oder Kunststoffe aufweisen und die im Innenbereich des Formkörpers eine Öffnung und/oder Aussparung zur Aufnahme einer Montagehilfe aufweisen. Diese Formkörper finden hauptsächlich Anwendung als abdichtendes und/oder akustisch wirkendes Schottteil in Hohlprofilen für den Automobilbau.

Ein weiterer Gegenstand der vorliegenden Erfindung ist ein Verfahren zum Fixieren dieser Schottteile in Hohlprofilen bei dem zunächst das Schottteil mit einer Montagehilfe verbunden wird und anschließend das Schottteil mit Hilfe dieser Montagehilfe in das Hohlprofil eingesetzt wird und dort fixiert wird, wobei anschließend die Montagehilfe wieder aus dem Hohlprofil entfernt wird.

Diese Montagehilfe ist dabei in der Regel in Form einer Lanze, einer Stange oder eines Rohres ausgebildet, sie kann starr, gebogen oder flexibel nach Art einer sogenannten Flexwelle ausgebildet sein, sie kann gegebenenfalls Gelenke aufweisen. Sie kann auch zweigeteilt in Form eines Rohres mit einer darin beweglichen "Seele" oder Stange oder in Form von zwei parallel laufenden Stangen ausgebildet sein. Diese Montagehilfe kann im Prinzip aus einer Vielzahl von Werkstoffen hergestellt sein, beispielhaft erwähnt seien Metalle, Kunststoffe oder faserverstärkte Kunststoffe.

Das Schottteil kann entweder einheitlich aus einem expansionsfähigen Kunststoffmaterial ohne Träger gefertigt werden, in einer Vielzahl an Anwendungen hat es sich jedoch als zweckmäßig erwiesen, eine zweiteilige Bauform zu wählen dergestalt, dass das Schottteil aus einem Träger besteht, der auch bei den Expansionstemperaturen formstabil bleibt und der in seinem Randbereich ein thermisch expandierbares Material aufweist.

Das Trägermaterial kann dabei aus Metall oder vorzugsweise aus thermoplastischen Kunststoffen geformt sein, wobei die thermoplastischen Kunststoffe gegebenenfalls faserverstärkt sein können. Bevorzugte thermoplastische Kunststoffe sind dabei Polyamide, Polyimide, Polyoxipropylen oder Polyethylenterephthalat.

Um eine fixierende Wirkung des Bauteiles in seiner montierten Position zu gewährleisten, weist der Kunststoff des Schottteiles im Außenrandbereich einen ausreichend hohen Reibungskoeffizienten gegen Metall und/oder Kunststoff der Innenwand des Hohlprofils auf, damit das Schottteil in seiner montierten Position durch Reibungskräfte gehalten wird. Ein ausreichend hoher Reibungskoeffizient µ ist daher vorzugsweise ein Wert, gemessen nach DIN 53375, von mindestens 0,3 vorzugsweise mindestens 0,5 bis 0,7. Geeignete polymere Basisbindemittel hierfür sind beispielsweise Ethylenvinylacetat-Copolymere (EVA), Copolymere des Ethylens mit (Meth)-acrylatestem, die gegebenenfalls noch anteilig (Meth)acrylsäure einpolymerisiert enthalten, statistische oder Blockcopolymere des Styrols mit Butadien oder Isopren oder deren Hydrierungsprodukte. Letztere können auch Triblockcopolymere vom Typ SBS, SIS oder deren Hydrierungsprodukte SEBS oder SEPS sein. Zusätzlich können die Bindemittel noch Vernetzer, Haftvermittler, Weichmacher sowie weitere Hilfs- und Zusatzstoffe enthalten. Zur Erzielung einer ausreichenden Treibfähigkeit und Expansionsfähigkeit enthalten diese polymeren Bindemittel noch Treibmittel. Als Treibmittel eignen sich im Prinzip alle bekannten Treibmittel wie z. B. die "chemischen Treibmittel" die durch Zersetzung Gase freisetzen oder physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Beispiele für die physikalischen Treibmittel sind expandierbare Kunststoffmikrohohlkugeln auf der Basis von Polyvinylidenchloridcopolymeren oder Acrylnitril/(Meth)acrylat-Copolymeren, wie sie z.B. unter den Namen "Dualite" bzw. "Expancel" von den Firmen Pierce & Stevens bzw. Casco Nobel im Handel erhältlich sind.

Das thermisch expandierbare Material umgibt dabei den Träger in der Regel vollständig und befindet sich vorzugsweise in einer U-förmigen Begrenzung, wobei das thermisch expandierbare Material in der Regel aus der offenen Seite des U-förmigen Teils herausragt.

Einige besonders bevorzugte Ausführungsformen sollen nun anhand der Zeichnungen näher erläutert werden.

Es zeigen im einzelnen:
- Figur 1: Ein Schottteil mit zwei Stützlaschen
- Figur 2: Montage eines Schottteils gemäß Fig. 1 in einem Hohlprofil
- Figur 3: Einen Schnitt gemäß Linie A-A in Fig. 2
- Figur 4: Montage eines Schottteils durch Ziehen
- Figur 5: Schnitt durch das Schottteil und Hohlprofil an der Linie B-B
- Figur 6: Ein Schottteil mit vier Stützlaschen
- Figur 7: Montage in einem Hohlprofil mit gleichmäßiger Querschnittsöffnung
- Figur 8: Querschnitt durch ein unregelmäßig geformtes Hohlprofil
- Figur 9: Montage eines Hohlprofils mit Klappmechanismus
- Figur 10: Klemmen durch Verdrehen des Schottteils
- Figur 11: Klemmen durch Verdrehen mit Hilfe einer eingebauten Klemmmechanik
- Figur 12: Fixieren durch Federkraft
- Figur 13: Fahrzeugkarosse mit hohlprofilartigen Bauteilen und möglichen Positionen für Schottteile

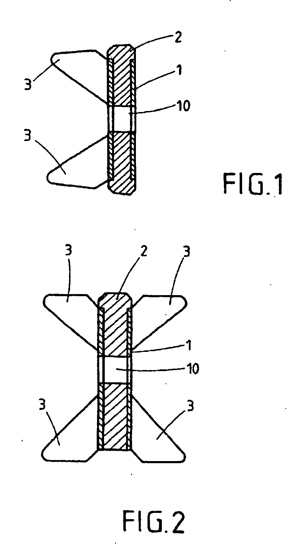

Figur 1 zeigt einen Längsschnitt durch ein Schottteil bestehend aus einem inneren Träger (1) der aus einem thermoplastischen Kunststoff (gegebenenfalls faserverstärkt) oder einem Metallblech besteht. Der Zwischenraum zwischen den beiden Trägerplatten ist durch ein thermisch expandierbares Material (2) ausgefültt, das über den Randbereich des durch die Trägerplatten gebildeten Zwischenraums hinausragt. Dabei umgibt das thermisch expandierbare Material in der Regel den Randbereich des Trägers in der Regel vollständig, dies bedeutet jedoch nicht, dass das Trägermaterial im Randbereich nicht auch Unterbrechungen aufweisen kann, hervorgerufen durch eventuell notwendige Stützrippen zwischen den beiden Platten des Trägers. An der Trägerplatte sind in dieser Ausführungsform senkrecht zur Querschnittsfläche "flügetartige" Stützlaschen (3) angebracht, die entweder federnd oder starr mit der Trägerplatte verbunden sind. Üblicherweise sind diese Stützlaschen aus dem gleichen Material wie die Trägerplatte gebildet und werden bei Trägern aus thermoplastischen Kunststoff mit der Trägerplatte gemeinsam in einem Spritzgussverfahren geformt.

Figur 2 zeigt ein ähnliches Schottteil wie Figur 1, jedoch weist dieses Schottteil vier Stützlaschen (3) auf, die jeweils senkrecht zur Querschnittsfläche des Trägers (1) angeordnet sind. In Figur 2 wird eine Ausführungsform dargestellt, bei der das thermisch expandierbare Material in der nicht expandierten Form nur einseitig aus dem Trägerplattenzwischenraum herausragt. Auch in diesem Fall können die Stützlaschen (3) federnd gelagert sein.

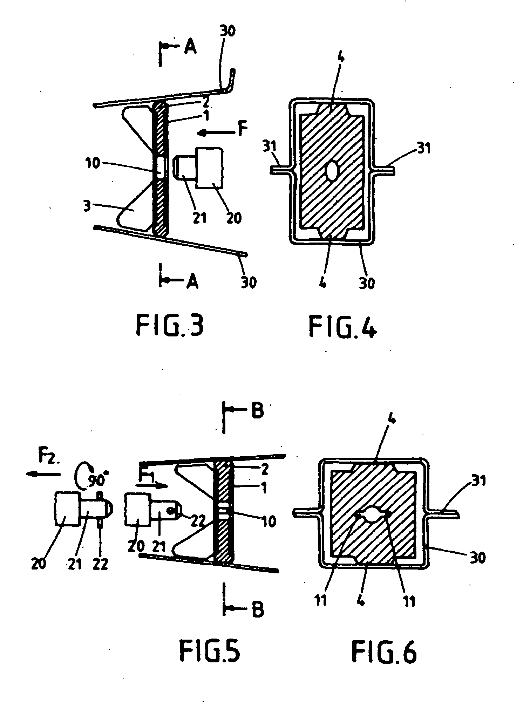

Figur 3 zeigt die Einbauposition eines Schottteiles gemäß Figur 1 ein Hohlprofil, dass einen sich verjüngenden Querschnitt seines Hohlraums aufweist. Das bedeutet, dass die Wandungen (30) des Hohlprofils nicht parallel verlaufen. Gezeigt ist fernerhin eine Montagehilfe aus einem Stab (20), der in seinem Vorderteil eine Verjüngung (21) aufweist, die so bemessen ist, dass sie in die Öffnung (10) des Schottteils eingreifen kann. Montagehilfe (20) und Schottteil werden zum Einbau gemeinsam in Pfeilrichtung. F geschoben, bis das Schottteil durch die Reibungskräfte der Kontaktflächen des thermisch expandierbaren Materials (2) an den Innenwänden des Hohlprofils (30) in seiner Montageposition gehalten wird.

Figur 4 zeigt einen Querschnitt an der Linie A-A in Figur 3. Hier ist gezeigt, dass die Kontaktflächen der Vorsprünge (4) des thermisch expandierbaren Materials an zwei Stellen die Innenwände des Hohlprofils (30) berühren und so durch die Reibungskräfte das Schottteil fixieren. Nicht dargestellt sind in dieser Abbildung das Trägermaterial sowie die Stützflügel und die Montagehilfe. Dargestellt ist hier ein Hohlprofil, dass aus zwei Blechformteilen oder Gussteilen an den Flanschen (31) zu einem Hohlprofil gefügt wurde. Es sind jedoch auch Hohlprofile einsetzbar, die einstückig ohne Naht beispielsweise im Strang- oder Druckgussverfahren hergestellt wurden.

Figur 5 zeigt ein Verfahren zum Fixieren des Schottteils, bei dem das Schottteil mit Hilfe der Montagehilfe durch Zug in seine Endposition gebracht wurde und dort fixiert wurde. Zu diesem Zweck weist die Montagehilfe in dem verjüngten Teil (21) noch eine Verriegelungsvorrichtung (22) auf. Diese Verriegelungsvorrichtung (22) ist in der einfachsten Ausführungsform ein senkrecht zur Längsachse der Montagehilfe in der Verjüngung (21) angeordneter Querstift. Zum Einfügen der Montagehilfe in das Schottteil durch Bewegung der Montagehilfe in Richtung des Pfeils (F 1) weist die Öffnung (10) des Schottteils Aussperrungen nach Art eines "Schlüsselloches" auf, durch die die Verriegelungsvorrichtung (22) geführt werden kann. Sobald die Montagehilfe in der zu verriegelnden Endposition im Schottteil eingeführt ist, wird die Montagehilfe um ihre Längsachse gedreht (z.B. um etwa 90°) anschließend wird dann das Schottteil mit der Montagehilfe in Richtung des Pfeils (F 2) in das Hohlprofil hineingezogen, bis es durch die Reibkräfte der Kontaktflächen an den Innenwänden des Hohlprofils in seine Endposition fixiert ist.

Anschließend wird die Montagehilfe wieder zurückgedreht und aus dem Schottteil herausgezogen.

Figur 6 zeigt einen Schnitt an der Linie B-B durch das Schottteil und den Hohlkörper gemäß Figur 5. Hier wird wiederum nur das thermisch expandierbare Material mit den Kontaktflächen der Vorsprünge (4), die in Berührung mit der Innenwand des Hohlprofils (30) stehen, gezeigt. Ein möglicher Träger ist nicht dargestellt. Weiterhin wird hier die schlitzartige Aussparung (11) der Öffnung (10) gezeigt, durch die das Verriegelungsmittel (22) der Montagehilfe (20) geführt werden kann. Auch in diesem Fall ist ein Hohlprofil mit flanschartigen Fügestellen (31) gezeigt, wobei auch in diesem Fall ein nahtloses Hohlprofil Verwendung finden kann.

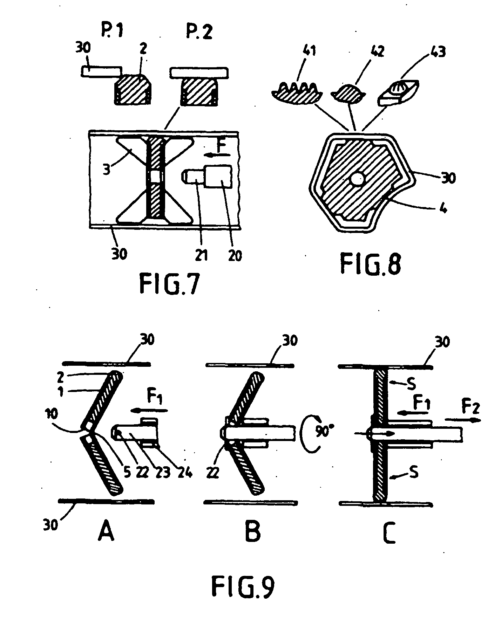

Figur 7 zeigt die Montage eines Schottteils gemäß Figur 2 mit vier Stützlaschen (3) in einem Hohlprofil mit durchgängig gleichmäßigen Querschnitt, d.h. im wesentlichen parallelen Wandungen (30) des Hohlprofils. Das Schottteil weist in diesem Fall nur einseitig eine vorstehende Klemmfläche eines Vorsprungs auf, dabei hat das Schottteil gegenüber der lichten Querschnittsöffnung des Hohlprofils ein leichtes Übermaß, wie in Position (P.1) beim Einführen des Schottteils in das Hohlprofil dargestellt. Ein Schottteil dieser Ausführungsform mit vier Stützlaschen (3) kann dann mit der Montagehilfe (20) durch Ausübung eines Drucks in Pfeilrichtung (F) so in das Hohlprofil eingebracht werden, dass es, wie in Stellung (P.2) dargestellt, unter Überwindung der Reibungskräfte in das Hohlprofil an die vorbestimmte Stelle hineingeschoben werden kann bis es durch die Klemmfläche dort fixiert wird.

Figur 8 zeigt ein Hohlprofil mit einem nicht rechteckigen Querschnitt. Hier werden zur stabilisierenden Fixierung mehr als zwei Vorsprünge (4) benötigt, die reibend im Kontakt mit der Innenwand des Hohlprofils (30) stehen. Fernerhin zeigt Figur 8 weitere mögliche Ausführungsformen der Vorsprünge (4) in Form von lammellenförmigen Lippen mit im wesentlichen (abgerundeten) zu Dreiecksformen (41) sowie Halbzylinderprofilen (42) bzw. Halbkugelprofilen (43).

Figur 9 zeigt ein Schottteil bei dem der Träger (1) in seiner Mitte ein Filmscharnier (5) aufweist, das gegebenenfalls an der Aufnahmeöffnung (10) für die Montagehilfe unterbrochen ist und das weiterhin eine schlitzförmige Aussparung (11) analog zur Darstellung in Figur 6 aufweist (hier nicht gezeigt). In (A) ist der Beginn der Montage dargestellt, das Schottteil ist dabei nach Art von Schmetterlingsflügeln über das Filmschamier leicht zusammengeklappt, so dass seine Ausdehnung geringer ist als die lichte Weite zwischen den Wandungen (30) des Hohlprofils. Als Montagehilfe ist hier eine zweiteilige Montagehilfe dargestellt, bestehend aus einem rohrförmigen Teil (24) in dem axial verschiebbar ein stabförmiger Teil (23) angeordnet ist, der quer zur Längsachse ein Verriegelungsmittel (22) in Form eines Querstiftes aufweist. Zur Verbindung des Schottteils mit der Montagehilfe wird dabei der stabförmige Teil (23) in Richtung des Pfeils (F 1) so durch die Öffnung (10) des Schottteils geschoben, dass der Querstift (22) durch die entsprechende Aussparung geführt werden kann. Anschließend wird der stabförmige Endteil (23) um seine Längsachse um etwa 90° gedreht, so dass eine Verriegelung der Montagehilfe dem Schottteil möglich ist, diese Position ist in (B) gezeigt. Anschließend wird das Schottteil mit Hilfe der Montagehilfe in Richtung des Pfeils (F 1) in seine zu fixierende Position im Hohlprofil gebracht. Sobald diese Position erreicht ist, wird die Montagehilfe in Richtung des Pfeils (F 2) gezogen, worauf das Schottteil in Richtung der gebogenen Pfeile (S) auseinander klappt und seine effektive volle Ausdehnung erhält und reibend mit der Innenseite der Hohlprofilwandung (30) in Kontakt treten kann und so fixiert wird. Durch entgegengesetzte Drehung des stabförmigen Endteils (23) der Montagehilfe kann diese dann vom Schottteil entriegelt werden und die Montagehilfe vom Schottteil durch Ziehen aus dem Hohlprofil getrennt werden.

Ein derartiges über ein Filmscharnier klappbares Schottteil kann prinzipiell auch ohne Hilfsöffnung (10) ausgeführt werden. Dieses wird dann in der schmetterlingsartig zusammengeklappten Form mit Hilfe einer einfachen Stange von der eingeknickten Seite aus in das Hohlprofil hineingeschoben. In Figur 9 entspricht die eingeknickte Seite in Position (A) der rechten Seite der Darstellung. Sobald die zu fixierende Position des Schottteils erreicht ist, wird das Schottteil durch Druck mit der Stange von der entgegengesetzten Seite auseinandergeklappt und erhält so ebenfalls seine effektive Ausdehnung und kann damit reibend mit der Innenseite der Hohlprofilwandung (30) in Kontakt treten kann und so fixiert werden.

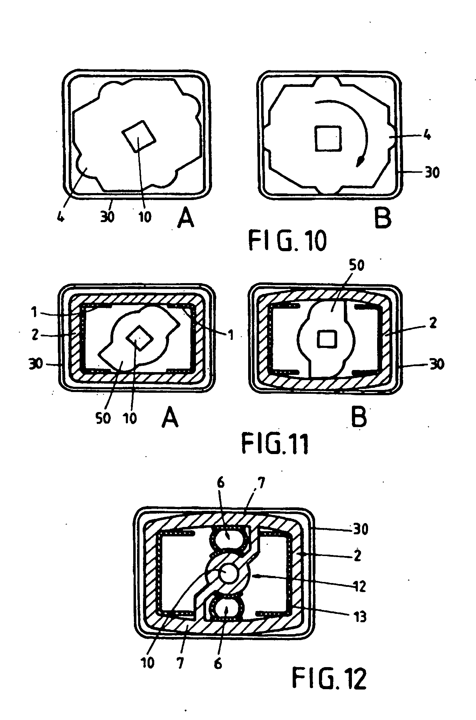

Figur 10 zeigt eine Ausführungsform des Schottteils mit asymmetrischen Verhältnis der Querschnittsachsen des Schottteils. Dieses Schottteil weist eine vieleckige Öffnung (10) auf und hat aufgrund seines asymmetrischen Verhältnisses der Querschnittsachsen solche Dimensionen, dass es in diagonaler Form leicht durch das Hohlprofil geschoben werden kann, dargestellt in Position (A). Die Montagehilfe weist in diesem Fall ebenfalls eine vieleckige Verjüngung auf, die in die entsprechende Öffnung (10) passt. Im konkreten Fall ist eine quadratische Öffnung gezeigt zu der ein entsprechender quadratischer Querschnitt der Verjüngung der Montagehilfe (hier nicht gezeigt) gehört. Es sind jedoch auch dreieckige, sechseckige, achteckige usw. (vieleckige) Querschnitte der Öffnungen und des entsprechenden verjüngten Teils der Montagehilfe möglich.

Sobald das Schottteil mit Hilfe der Montagehilfe an die vorbestimmte Stelle im Hohlprofil geschoben oder gezogen wurde, wird durch Drehung um die Längsachse der Montagehilfe das Schottteil so positioniert, dass die Vorsprünge (4) reibend im Kontakt mit der Innenwandung des Hohlprofils (30) treten und so das Schottteil fixieren, diese Position ist in (B) dargestellt. Nicht gezeigt ist in diesem Falle ein ggf. vorhandener Trägerteil des Schottteils.

Figur 11 zeigt ein Schottteil, dessen Träger (1) ein drehbar gelagertes Teil (50) mit asymmetrischen Querschnittsachsenverhältnis aufweist und das eine vieleckige Öffnung (10) - im konkreten Fall viereckig - aufweist. In der in (A) gezeigten Stellung wirkt dieses Verriegelungs-Drehteil (50) nicht gegen die Innenseite des thermisch expandierbaren Materials (20). Da der Gesamtquerschnitt des Schottteils einschließlich des thermisch expandierbaren Materials (2) geringer ist als die Querschnittsöffnung des Hohlprofils, läßt sich das Schottteil kraftlos bis an die vorgesehene Stelle im Hohlprofil schieben oder ziehen. Sobald diese Stelle erreicht ist, wird die Verriegelungsvorrichtung (50) um die Achse senkrecht zur Querschnittsebene des Schottteils verdreht, so dass die Verriegelungsvorrichtung (50) von innen gegen das thermisch expandierbare Material (2) wirkt und dieses gegen die Innenwandung des Hohlprofils (30) gedrückt wird und so über die Reibkraft das Schottteil an der vorgesehenen Stelle fixiert.

Figur 12 zeigt eine weitere erfindungsgemäße Ausgestaltung des Schottteils und seine Anordnung im Hohlprofil. In diesem Fall ist der Träger mehrteilig ausgebildet, er besteht aus zwei Platten (nicht gezeigt) die durch die Randbegrenzung (13) zusammengehalten werden und die als Begrenzung für das thermisch expandierbare Material (2) dienen. Weiterhin weist der Träger zwei Vorrichtungen (6) auf, die so geformt sind, dass sie wie ein Federmechanismus auf das thermisch expandierbare Material (2) wirken und so das thermisch expandierbare Material in Richtung mindestens einer Querschnittsachse unter Vorspannung bringen, dass sie die Klemmflächen bereichsweise direkt gegen die Innenwandung des Hohlprofils (30) drücken. Beim Einsetzen dieses Schottteils am Anfang der Querschnittsöffnung muss das thermisch expandierbare Material in den Bereichen (7) gegen die Federkraft der Vorrichtungen (6) gedrückt werden und das Schottteil unter dieser Vorspannung in das Hohlprofil eingeführt werden. Anschließend kann es mit Hilfe einer normalen Montagehilfe, die in die Öffnung (10) gesteckt wird an die vorbestimmte Position im Hohlprofil geschoben werden. In diesem Falle ist die Öffnung (10) von thermisch expandierbaren Material umgeben. Beim Aufschäumen des expandierbaren Materials wird dann die nur zur Montagezwecken notwendige Öffnung (10) ebenfalls verschlossen.

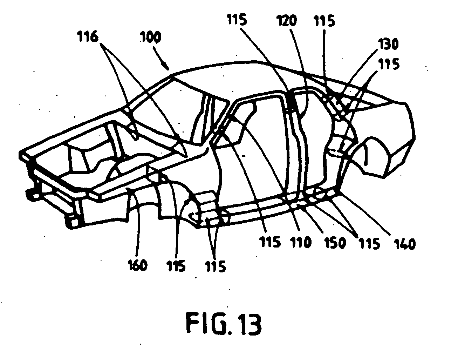

Figur 13 zeigt eine schematische Darstellung einer Fahrzeugkarosse in der abzudichtende Hohlprofile ersichtlich sind. Es sind dies A-Säule (110), B-Säule (120), C-Säule (130), der Schwelle (150), der Ansatz des hinteren Kotflügels (140) sowie die vordern Kotflügelbereiche (160) in die jeweils Schottteile (115) der vorgenannte Ausführungsformen eingebracht worden sind. Weiterhin sind in den Hohlprofilteil unterhalb der Windschutzscheibe Schottteile (116) der vorgenannten Art verbaut worden.

## Patentansprüche

1. Abdichtendes und akustisch wirkendendes Schottteil geeignet zur mechanischen Fixierung im Hohlraum (30) von strukturellen Bauteilen **dadurch gekennzeichnet, dass** das Schottteil in seinem Außenrandbereich (2) ein thermisch expandierbares Material (2) mit einem hohen Reibungskoeffizienten gegen Metall und/oder Kunststoffen aufweist und im Innenbereich eine Öffnung (10) und/oder Aussparung zur Aufnahme einer Montagehilfe (20) hat.

2. Schottteil nach Anspruch 1, **dadurch gekennzeichnet, dass** das Schottteil aus einem inneren Träger (1) aus einem thermoplastischen Kunststoff und/oder Metall und einem den Randbereich (2) des Trägers umgebenden thermisch expandierbaren Material besteht.

3. Schottteil nach Anspruch 1 oder 2 **dadurch gekennzeichnet, dass** es zur Stabilisierung Stützlaschen (3) aufweist.

4. Schottteil nach mindestens einem der Ansprüche 1 bis 3, **dadurch gekennzeichnet, dass** der schäumbare Randbereich (2) an mindestens einer Stelle Klemmprofil-artige Vorsprünge (4) aufweist.

5. Schottteil nach Anspruch 1, 2 oder 4, **dadurch gekennzeichnet, daß** es ein Filmschamier (5) aufweist, das ein Aufklappen des Schottteils zum Fixieren im Hohlraum ermöglicht.

6. Schottteil nach Anspruch 1 oder 2, **dadurch gekennzeichnet, daß** das Trägermaterial Federkraft ausübende Formteile (6) aufweist, die das schäumbare Randmaterial (2) bereichsweise (7) gegen die Innenwand eines Hohlprofils drücken.

7. Schottteil nach Anspruch 1 oder 2, **dadurch gekennzeichnet, daß** der Träger einer drehbare Vorrichtung (50) mit asymmetrischem Querschnitt aufweist.

8. Schottteil nach Anspruch 4, **dadurch gekennzeichnet, daß** die Vorsprünge (4) als Lamellen und/oder Lippen mit Dreiecks-, Rechteck-, Trapez-, Halbzylinder-, Pyramiden-, Pyramidenstumpf- oder Halbkugelprofil ausgebildet sind.

9. Schottteil nach mindestens einem der vorhergehenden Ansprüche, **dadurch gekennzeichnet, daß** die Öffnung (10) einem kreisförmigen, ellipsenförmigen oder vieleckigen Querschnitt aufweist.

10. Schottteil nach Anspruch 9, **dadurch gekennzeichnet, daß** die Öffnung (10) zusätzlich Aussparungen (11) zur Verriegelung der Montagehilfe aufweist.

11. Schottteil nach mindestens einem der vorhergehenden Ansprüche, **dadurch gekennzeichnet, daß** das schäumbare Material des Randbereiches (2) einem Reibungskoeffizienten µ von mindestens 0,5 (nach DIN 53375) aufweist.

12. Verfahren zum Fixieren von Schottteilen in Hohlprofilen nach mindestens einem der Ansprüche 1 bis 11, **gekennzeichnet durch** die folgenden wesentlichen Verfahrensschritte
a) Verbinden des Schottteils mit einer Montagehilfe (20) **durch** Einführen einer verjüngten Aufnahme (21) in die Öffnung (10) des Schotteils, ggf. gefolgt von einer Drehung der Montagehilfe um deren Achse zur Verrastung von Schottteil und Montagehilfe,
b) Einsetzen des Schottteils in das Profil, wobei dieses
(i) bei sich verjüngenden Hohlprofilen am größeren Querschnittsende eingesetzt wird und mit Hilfe der Montagehilfe bis zur Selbstfixierung durch die Klemmwirkung gedrückt oder gezogen wird, oder
(ii) bei Profilen mit konstantem. Querschnitt an einem Querschnittsende des Hohlprofils eingesetzt wird und unter beständiger Krafteinwirkung an die vorbestimmte Stelle gezogen oder geschoben wird und dort mit Hilfe der Klemmung **durch** Punkt- oder Flächenauflage der Vorsprünge (4), Aufklappen des Schottteils, Verdrehen des Schottteils **durch** Drehung der Montagehilfe um ihre Längsachse oder **durch** Federwirkung fixiert wird und
c) die Montagehilfe, ggf. unter Drehen und Entrastung vom Schottteil getrennt wird und aus dem Hohlprofil entfernt wird.

## Claims

1. A sealing and acoustically active bulkhead part, suitable for mechanical fixation in the cavity of structural components, **characterised in that** the bulkhead part has in its outer edge region a high coefficient of friction in relation to metal and/or plastics and in the inner region has an aperture and/or recess for receiving a mounting aid.

2. Bulkhead part according to claim 1, **characterised in that** the bulkhead part consists of an inner support (1) made of a thermoplastic and/or metal and a thermally expandable material surrounding the edge region (2) of the support.

3. Bulkhead part according to claim 1 or 2, **characterised in that** it has supporting shackles (3) for the purpose of stabilization.

4. Bulkhead part according to at least one of claims 1 to 3, **characterised in that** the foamable edge region (2) has clamping-section-type projections (4) at least at one point.

5. Bulkhead part according to claim 1, 2 or 4, **characterised in that** it has a film hinge (5) which enables the bulkhead part to be folded upwards with a view to fixing it in the cavity.

6. Bulkhead part according to claim 1 or 2, **characterised in that** the support material has mouldings (6) exerting spring force which press the foamable edge material (2) zonally (7) against the inner wall of a hollow section.

7. Bulkhead part according to claim 1 or 2, **characterised in that** the support has a rotatable device (50) having asymmetrical cross-section.

8. Bulkhead part according to claim 4, **characterised in that** the projections (4) take the form of lamellae and/or lips with a triangular, rectangular, trapezoidal, semicylindrical, pyramidal, frustropyramidal or hemispherical shape.

9. Bulkhead part according to at least one of the preceding claims, **characterised in that** the aperture (10) has a circular, elliptical or polygonal cross-section.

10. Bulkhead part according to claim 9, **characterised in that** the aperture (10) additionally has recesses (11) for latching the mounting aid.

11. Bulkhead part according to at least one of the preceding claims, **characterised in that** the foamable material of the edge region (2) has a coefficient of friction *µ* of at least 0.5 (according to DIN 53375).

12. A process for fixing bulkhead parts in hollow sections according to at least one of claims 1 to 11, **characterised by** the following essential process steps:
a) connecting the bulkhead part to the mounting aid (20) by introducing the tapered socket (21) into the aperture (10) in the bulkhead part, optionally followed by a rotation of the mounting aid about the axis thereof with a view to interlocking the bulkhead part and the mounting aid,
b) inserting the bulkhead part into the section, whereby said bulkhead part
(i) in the case of tapering hollow sections is inserted at the larger cross-sectional end and is pushed or pulled with the aid of the mounting aid until self-fixation occurs by virtue of the clamping action, or
(ii) in the case of sections having constant cross-section is inserted at one cross-sectional end of the hollow section and is pulled or pushed to the predetermined point under constant application of force and is fixed there with the aid of the clamping by point contact or area contact of the projections (4), folding-upwards of the bulkhead part, twisting of the bulkhead part as a result of rotation of the mounting aid about its longitudinal axis or by spring action and
c) the mounting aid, optionally by rotating and unlatching, is separated from the bulkhead part and is removed from the hollow section.

## Revendications

1. Pièce de cloisonnement isolant à effet acoustique apte à la fixation mécanique dans la cavité (30) d'éléments structurels, **caractérisée en ce que** la pièce de cloisonnement présente dans sa partie périphérique (2) une matière thermoexpansible (2) à haut coefficient de frottement contre le métal et/ou les matières plastiques et dans la partie intérieure une ouverture (10) et/ou un creux pour recevoir un dispositif d'aide au montage (20).

2. Pièce de cloisonnement selon la revendication 1, **caractérisée en ce que** la pièce de cloisonnement est constituée d'un support intérieur (1) en matière thermoplastique et/ou métal et d'une matière thermoexpansible enveloppant la partie périphérique (2) du support.

3. Pièce de cloisonnement selon la revendication 1 ou 2, **caractérisée en ce qu'**elle présente des languettes d'appui (3) destinées à la stabilisation.

4. Pièce de cloisonnement selon au moins l'une des revendications 1 à 3, **caractérisée en ce que** la partie périphérique (2) expansible présente à au moins un endroit des saillies (4) de type profil de serrage.

5. Pièce de cloisonnement selon la revendication 1, 2 ou 4, **caractérisée en ce qu'**elle présente une charnière film (5) permettant de déplier la pièce de cloisonnement en vue de sa fixation dans la cavité.

6. Pièce de cloisonnement selon la revendication 1 ou 2, **caractérisée en ce que** le support présente des pièces de forme (6) exerçant une force élastique et qui plaquent la matière périphérique expansible (2), par zones (7), contre la paroi intérieure d'un profil creux.

7. Pièce de cloisonnement selon la revendication 1 ou 2, **caractérisée en ce que** le support présente un dispositif tournant (50) de section asymétrique.

8. Pièce de cloisonnement selon la revendication 4, **caractérisée en ce que** les saillies (4) sont réalisées en tant que lamelles et/ou lèvres de forme triangulaire, rectangulaire, trapézoïdale, demi-cylindrique, pyramidale, pyramidale tronquée ou hémisphérique.

9. Pièce de cloisonnement selon au moins l'une des revendications précédentes, **caractérisée en ce que** l'ouverture (10) présente une section circulaire, elliptique ou polygonale.

10. Pièce de cloisonnement selon la revendication 9, **caractérisée en ce que** l'ouverture (10) présente en outre des creux (11) destinés au verrouillage du dispositif d'aide au montage.

11. Pièce de cloisonnement selon au moins l'une des revendications précédentes, **caractérisée en ce que** la matière expansible de la partie périphérique (2) présente un coefficient de frottement µ au moins égal à 0,5 (selon DIN 53375).

12. Procédé de fixation de pièces de cloisonnement dans des profils creux selon au moins l'une des revendications 1 à 11, **caractérisé par** les étapes essentielles suivantes:
a) solidarisation de la pièce de cloisonnement à un dispositif d'aide au montage (20), en introduisant un logement conique (21) dans l'ouverture (10) de la pièce de cloisonnement, le cas échéant suivi d'une rotation du dispositif d'aide au montage autour de son axe pour verrouiller pièce de cloisonnement et dispositif d'aide au montage,
b) mise en place de la pièce de cloisonnement dans le profil, celui-ci
(i) dans le cas de profils creux coniques, est mis en place à l'extrémité présentant la section plus grande et est poussé ou tiré au moyen du dispositif d'aide au montage jusqu'à l'autofixation grâce à l'effet de serrage, ou
(ii) dans le cas de profils de section constante, est mis en place à une extrémité du profil creux et, sous l'action d'une force constante, est tiré ou poussé à l'endroit prédéterminé pour y être fixé grâce au serrage par appui ponctuel ou de surface des saillies (4), dépliage de la pièce de cloisonnement, torsion de la pièce de cloisonnement par rotation du dispositif d'aide au montage autour de son axe longitudinal ou par effet élastique, et
c) désolidarisation du dispositif d'aide au montage de la pièce de cloisonnement, le cas échéant par rotation et déverrouillage, et retrait de celui-ci du profil creux.
